# EUROPÄISCHE PATENTSCHRIFT

(11) **EP 2 633 272 B1**
(45) Veröffentlichungstag und Bekanntmachung des Hinweises auf die Patenterteilung: **28.01.2015**
(21) Anmeldenummer: 11805835.3
(22) Anmeldetag: 21.12.2011
(51) Int. Cl.: G01B 7/30, G01D 5/14

(54) **ERMITTLUNG DER WINKELLAGE EINES ROTORS**
DETERMINING THE ANGULAR POSITION OF A ROTOR
DÉTERMINATION DE LA POSITION ANGULAIRE D'UN ROTOR

(30) Priorität: 30.12.2010 DE 102010056468
(43) Veröffentlichungstag der Anmeldung: 04.09.2013
(73) Patentinhaber: Siemens Aktiengesellschaft, 80333 München (DE)
(72) Erfinder: GUTZMER, Marcus, 30827 Garbsen (DE); KRAUSE, Uwe, 30982 Pattensen (DE); NOLTE, Uwe, 30890 Barsinghausen (DE)
(86) Internationale Anmeldenummer: PCT/EP2011/073539
(87) Internationale Veröffentlichungsnummer: WO 2012/089578

(56) Entgegenhaltungen:
- EP-A2- 1 918 678
- DE-A1-102007 000 440
- US-A1- 2009 115 409
- US-A1- 2009 206 827
- US-A1- 2010 007 340

## Beschreibung

Die Erfindung betrifft ein Verfahren zur Ermittlung der Winkellage eines Rotors eines Motors, einen Winkellagegeber sowie einen Motor.

Die elektronische Ansteuerung von Motoren und/oder einer Last erfordert häufig eine Kenntnis der Position. Insbesondere bei Multi-Turn-Anwendungen (also da, wo der Motor zwischen den Endstellungen mehrere Umdrehungen zurücklegt) ist es sehr interessant zu wissen, bei welcher Absolutposition man sich befindet.

Die Erfassung der Position für Single-Turn-Anwendungen ist bereits auf verschiedenste Arten gelöst, wie beispielsweise durch:
- Inkrementalgeber (auch mit Index-Spur),
- optische Absolutwertgeber (n Spuren ergeben eine Winkelauflösung von 2^n),
- Resolver,
- magnetische Erfassung z.B. mittels Hall- oder GMR-Effekt (Giant MagnetoResistance),
- kapazitive Verfahren und
- resistive Verfahren.

Mit Ausnahme der ersten beiden Verfahren arbeiten alle anderen auf analoger Basis und bereiten das Messsignal mittels AD-Wandler für die nachfolgende Verarbeitung auf.

Bei Multi-Turn-Anwendungen gibt es die Möglichkeit, die Anzahl der Umdrehungen entweder mechanisch (z.B. mittels Getriebe) oder elektrisch (z.B. in einem nonvolatilen Speicher) abzulegen.

Der Erfindung liegt die Aufgabe zugrunde, eine einfache Lösung zur Ermittlung der Winkellage eines Rotors anzugeben.

Diese Aufgabe wird gelöst durch ein Verfahren zur Ermittlung der Winkellage eines Rotors eines Motors, wobei zumindest ein Magnet mittelbar oder unmittelbar mit einer Motorachse verbunden wird, wobei zumindest ein magnetisch empfindlicher Speicher mit mehreren Speicherzellen derart angeordnet wird, dass zumindest einige der Speicherzellen vom Magneten magnetisiert werden, wobei die Speicherzellen ausgelesen werden und wobei die Winkellage aus einer geometrischen Lage der magnetisierten Zellen ermittelt wird.

Die Aufgabe wird weiter gelöst durch einen Winkellagegeber und einen Motor mit den in den Ansprüchen 6 bzw. 11 angegebenen Merkmalen.

Die Erfassung der Position für Single-Turn-Anwendungen kann erfindungsgemäß magnetisch direkt digital erfasst werden, indem ein digitaler Speicher auf magnetischer Basis (z.B. MRAM, Magnetoresistive Random Access Memory), der auf externe Magnetfelder empfindlich ist, ausgelesen wird. Die Winkellage lässt sich so recht einfach ermitteln, da die geometrische Lage der magnetisierten Zellen einen direkten Rückschluss auf die Winkellage des Magneten erlaubt (und damit auf die Winkellage des Rotors, da der Magnet mit der Motorachse verbunden ist). Dabei kann der Magnet verschieden ausgeführt sein, z.B. als einfacher Stabmagnet oder auch als mehrpoliger Magnet, entscheidend ist die Möglichkeit des Rückschlusses auf die Winkellage aus dem "magnetischen Muster" in den magnetisierten Speicherzellen. Die geometrische Lage der magnetisierten Zellen auf dem Speicher (Chip) ist dann ein direktes Maß für die Rotorlage.

Die vorgeschlagene Lösung arbeitet ohne AD-Wandler und liefert direkt auf digitaler Basis ein Messsignal. Damit spart man die entsprechende analoge Schaltungstechnik inklusive aller zugehörigen Probleme (wie z.B. Abgleich-, Offset- und Temperaturfehler sowie EMV- und Klimaempfindlichkeit).

In einer vorteilhaften Form der Ausgestaltung wird zur Ermittlung der Winkellage zumindest eine statistische Methode verwendet. Hierdurch - z.B. durch eine geometrische Mittelwertbildung - kann die Genauigkeit bei der Bestimmung der Winkellage erhöht werden.

In einer weiteren vorteilhaften Ausführungsform ist der Magnet zentrisch magnetisiert und wird exzentrisch zur Motorachse angeordnet. Diese Variante ermöglicht eine besonders einfache Auswertung, da bei einer Rotation der Motorachse die der inneren Magnetisierung des Magneten entsprechenden Speicherzellen des magnetsich empfindlichen Speichers durch die äußere Magnetisierung überschrieben werden und sich die Winkellage des Rotors quasi aus der (x/y-) Position der der inneren Magnetisierung entsprechenden Speicherzellen ergibt.

In einer weiteren vorteilhaften Ausführungsform wird eine Anzahl von Umdrehungen in einem nicht-flüchtigen Speicher gespeichert. Auf diese Weise kann die Erfindung auch für Multi-Turn-Anwendungen angewendet werden, wobei die Position über einen Spannungsausfall hinaus dauerhaft gespeichert wird.

In einer weiteren vorteilhaften Ausführungsform wird dabei als nicht-flüchtiger Speicher der magnetisch empfindliche Speicher verwendet und die Anzahl in zumindest einer Speicherzelle gespeichert, die nicht vom Magneten magnetisiert wird. Somit wird im Vergleich zu einem Single-Turn-Winkelgeber ohne Mehraufwand ein Multi-Turn-Geber mit dauerhafter Speicherung der Position für Multi-Turn-Anwendungen möglich, wobei (Speicher-) Bereiche auf dem magnetisch empfindlichen Chip (dem Speicher) genutzt werden, die nicht vom zu erfassenden Magnetfeld des Magneten beeinflusst werden.

In einer weiteren vorteilhaften Ausführungsform wird zumindest eine Speicherzelle derart vom Magneten abgeschirmt, dass sie durch diesen nicht magnetisiert wird. Hierdurch kann der magnetisch empfindliche Speicher auch dann genutzt werden, wenn durch die Anordnung / die Ausmaße von Magnet und Speicher keine Bereiche unbeeinflusst bleiben.

Im Folgenden wird die Erfindung anhand der in den Figuren dargestellten Ausführungsbeispiele näher beschrieben und erläutert. Es zeigen:
- FIG 1: eine schematische Darstellung eines erfindungsgemäßen Motors,
- FIG 2: eine Darstellung der magnetisierten Speicherzellen.

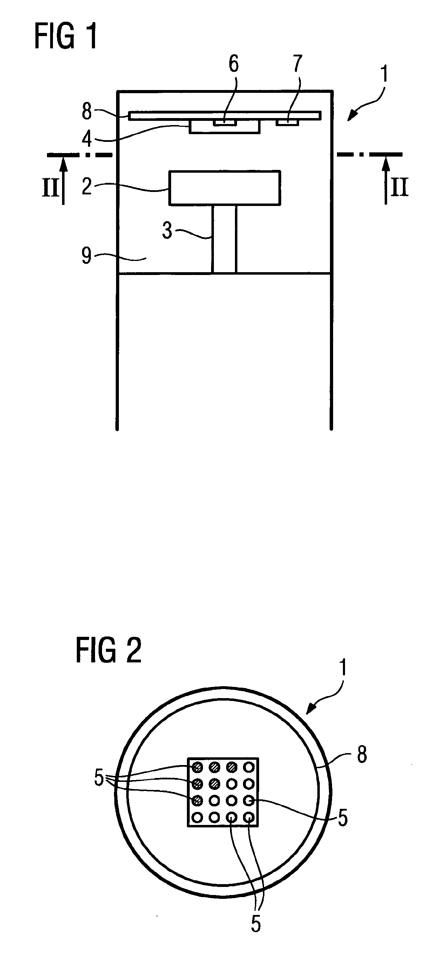

Fig 1 zeigt einen erfindungsgemäßen Motor 1 mit einem erfindungsgemäßen Winkellagegeber, der zumindest einen Magneten 2, einen magnetisch empfindlichen Speicher 4, eine Ausleseeinheit 6 und eine Auswerteeinheit 7 aufweist. Der Magnet 2 ist an der Motorachse 3 angebracht und vollzieht somit deren Drehungen mit. Entsprechend der jeweiligen Lage des Magneten 2 werden die Speicherzellen 5 (s. Fig. 2) des Speichers 4, der z.B. als MRAM ausgeführt sein kann, magnetisiert. Bei einem einfachen Magneten 2 mit einem Nord- und einem Südpol wird also grob die Hälfte (gemäß der dargestellten Anordnung) der Speicherzellen 5 N-magnetisiert und die andere Hälfte S-magnetisiert sein.

Die Speicherzellen 5 werden mittels einer Ausleseeinheit 6 ausgelesen. Anhand ihrer Magnetisierung (Nord/Süd) und der geometrischen Lage der magnetisierten Zellen auf dem Chip 4 ermittelt die Auswerteeinheit 7 die Winkellage des Magneten 2 und damit auch die des Rotors. Die Auswerteeinheit 7 kann dabei Bestandteil einer ggf. vorhandenen Leiterplatte 8 sein, die wie in der Figur dargestellt in einem Motordeckel 9 angeordnet sein kann.

Anstelle eines einfachen Magneten 2 kann auch ein mehrpoliger Magnet, z.B. 4-polig, verwendet werden, der dann vorteilhafterweise azentrisch zur Rotorachse 3 angebracht wird, so dass das "magnetische Muster" auf dem Chip 4 einen eindeutigen Rückschluss auf die Winkellage des Rotors erlaubt. Ebenso möglich ist eine Ausführung mit zwei oder mehreren kleineren Magneten, mit denen ebenfalls ein eindeutiges "Muster" erzeugt werden kann. Auch möglich ist natürlich die Verwendung mehrerer (kleinerer) Magnetspeicher. In einer besonders vorteilhaften Variante wird ein zentrisch (ringförmig) magnetisierter Magnet exzentrisch zur Motorachse 3 angeordnet, so dass bei einer Rotation der Motorachse 3 die der inneren Magnetisierung des Magneten entsprechenden Speicherzellen 5 durch die äußere Magnetisierung überschrieben werden und sich so praktisch aus der (x/y-) Position der der inneren Magnetisierung entsprechenden Speicherzellen 5 auf dem magnetisch empfindlichen Speicher 4 auf die Winkellage des Rotors geschlossen werden kann.

Durch die erfindungsgemäße Lösung wird ein Baustein (der Speicher 4), welcher nicht für diesen Bereich (Ermittlung der Winkellage) entwickelt wurde und welcher für die ursprüngliche Anwendung (Datenspeicherung) unerwünschte Empfindlichkeiten zeigt, genau in diesem Bereich angewendet, um dabei die Empfindlichkeit in vorteilhafter Weise zu nutzen. Dabei arbeitet die Erfindung ohne AD-Wandler und liefert direkt auf digitaler Basis ein Messsignal, wodurch die entsprechende analoge Schaltungstechnik inklusiv aller zugehörigen Probleme eingespart wird.

Fig 2 zeigt eine Aufsicht auf den magnetisch empfindlichen Speicher 4 mit seinen Speicherzellen 5, wobei der Speicher 4 auf der Leiterplatte 8 angeordnet ist. Die vollen Kreise stehen für N-magnetisierte Zellen 5, die leeren Kreise für S-magnetisierte. Aus der geometrischen Lage der jeweiligen Zellen ergibt sich schon "auf einen Blick" die Winkellage des Magneten 2 mit Nord- und Südpol von links oben nach rechts unten. Aus diesem Muster ermittelt die Auswerteeinheit 7 (hier nicht dargestellt), zur Erhöhung der Genauigkeit vorteilhafterweise unter Verwendung zumindest einer statistischen Methode, entsprechend die Winkellage des Rotors des Motors 1.

Zur Verwendung des erfindungsgemäßen Winkellagegebers als Multi-Turn-Geber wird die Anzahl der Umdrehungen in einem nicht-flüchtigen Speicher gespeichert. Dieser kann z.B. in der Leiterplatte integriert sein (oder es wird ein dort schon vorhandener Speicher mitbenutzt"), es können aber auch Speicherzellen 5, die entweder ohnehin nicht vom Magnetfeld des Magneten 2 beeinflusst werden (anders als in der Darstellung) oder entsprechend abgeschirmt werden, für die Speicherung der Anzahl der Umdrehungen genutzt werden. Somit wird nicht nur wie bei jedem Single-Turn-Geber der Drehwinkel erfasst, sondern auch ohne Mehraufwand die Position über einen Spannungsausfall hinaus dauerhaft gespeichert, wobei aus der Anzahl der Umdrehungen zusammen mit der aktuellen Winkellage natürlich auch auf eine (lineare) Position eines durch den Motor angetriebenen bewegbaren Elementes geschlossen werden kann. Als Beispiele für Systeme, bei denen die erfindungsgemäße Lösung mit Vorteil anwendbar ist, können automatisch betätigbare Öffnungsmechanismen wie beispielsweise Fahrstuhltüren genannt werden.

Zusammenfassend betrifft die Erfindung ein Verfahren zur Ermittlung der Winkellage eines Rotors eines Motors, einen Winkellagegeber sowie einen Motor. Um eine einfache Lösung zur Ermittlung der Winkellage eines Rotors anzugeben, wird vorgeschlagen, zumindest einen Magneten mittelbar oder unmittelbar mit einer Motorachse zu verbinden, zumindest einen magnetisch empfindlichen Speicher mit mehreren Speicherzellen derart anzuordnen, dass zumindest einige der Speicherzellen vom Magneten magnetisiert werden, die Speicherzellen auszulesen und die Winkellage aus einer geometrischen Lage der magnetisierten Zellen zu ermitteln.

## Patentansprüche

1. Verfahren zur Ermittlung der Winkellage eines Rotors eines Motors (1), wobei zumindest ein Magnet (2) mittelbar oder unmittelbar mit einer Motorachse (3) verbunden wird, wobei zumindest ein magnetisch empfindlicher Speicher (4) mit mehreren Speicherzellen (5) derart angeordnet wird, dass zumindest einige der Speicherzellen (5) vom Magneten (2) magnetisiert werden, wobei die Speicherzellen (5) ausgelesen werden und wobei die Winkellage aus einer geometrischen Lage der magnetisierten Zellen (5) ermittelt wird.

2. Verfahren nach Anspruch 1,
wobei zur Ermittlung der Winkellage zumindest eine statistische Methode verwendet wird.

3. Verfahren nach Anspruch 1 oder 2,
wobei der Magnet zentrisch magnetisiert ist und exzentrisch zur Motorachse (3) angeordnet wird.

4. Verfahren nach einem der vorhergehenden Ansprüche,
wobei eine Anzahl von Umdrehungen in einem nicht-flüchtigen Speicher gespeichert wird.

5. Verfahren nach Anspruch 4,
wobei als nicht-flüchtiger Speicher der magnetisch empfindliche Speicher (4) verwendet und die Anzahl in zumindest einer Speicherzelle (5) gespeichert wird, die nicht vom Magneten (2) magnetisiert wird.

6. Verfahren nach Anspruch 5,
wobei zumindest eine Speicherzelle (5) derart vom Magneten (2) abgeschirmt wird, dass sie durch diesen nicht magnetisiert wird.

7. Winkellagegeber zur Ermittlung der Winkellage eines Rotors eines Motors (1) mit zumindest einem mittelbar oder unmittelbar mit einer Motorachse (3) verbindbaren Magneten (2), mit zumindest einem derart anordenbaren magnetisch empfindlichen Speicher (4) mit mehreren Speicherzellen (5), dass zumindest einige der Speicherzellen (5) vom Magneten (2) magnetisierbar sind, mit einer Ausleseeinheit (6) zum Auslesen der Speicherzellen (5) und mit einer Auswerteeinheit (7) zur Ermittlung der Winkellage aus einer geometrischen Lage der magnetisierten Zellen (5).

8. Winkellagegeber nach Anspruch 7,
wobei die Auswerteeinheit (7) zur Ermittlung der Winkellage anhand zumindest einer statistischen Methode ausgebildet ist.

9. Winkellagegeber nach Anspruch 7 oder 8,
wobei der Magnet zentrisch magnetisiert ist und exzentrisch zur Motorachse (3) anordenbar ist.

10. Winkellagegeber nach einem der Ansprüche 7 bis 9,
wobei eine Anzahl von Umdrehungen in einem nicht-flüchtigen Speicher speicherbar ist.

11. Winkellagegeber nach Anspruch 10,
wobei als nicht-flüchtiger Speicher der magnetisch empfindliche Speicher (4) verwendbar und die Anzahl in zumindest einer Speicherzelle (5) speicherbar ist, die nicht vom Magneten (2) magnetisierbar ist.

12. Winkellagegeber nach Anspruch 11,
wobei zumindest eine Speicherzelle (5) derart vom Magneten (2) abschirmbar ist, dass sie durch diesen nicht magnetisierbar ist.

13. Motor (1) mit einem Winkellagegeber nach einem der Ansprüche 7 bis 12.

## Claims

1. Method for determining the angular position of a rotor of a motor (1), wherein at least one magnet (2) is indirectly or directly connected to a motor axle (3), wherein at least one magnetically sensitive storage device (4) with a number of storage cells (5) is arranged such that at least some of the storage cells (5) are magnetised by the magnet (2), wherein the storage cells (5) are read out and wherein the angular position is determined from a geometric position of the magnetised cells (5).

2. Method according to claim 1,
wherein at least one statistical method is used to determine the angular position.

3. Method according to claim 1 or 2,
wherein the magnet is magnetised centrically and arranged eccentrically in respect of the motor axle (3).

4. Method according to one of the preceding claims,
wherein a number of rotations is stored in a non-volatile storage device.

5. Method according to claim 4,
wherein the magnetically sensitive storage device (4) is used as a non-volatile storage device and the number is stored in at least one storage cell (5), which is not magnetised by the magnet (2).

6. Method according to claim 5,
wherein at least one storage cell (5) is shielded from the magnet (2) such that it is not magnetised hereby.

7. Angular position transmitter for determining the angular position of a rotor of a motor (1) having at least one magnet (2) which can be connected indirectly or directly to a motor axle (2), having at least one magnetically sensitive storage device (4) with a number of storage cells (5) which can be arranged in such a way that at least some of the storage cells (5) can be magnetised by the magnet (2), having a read-out unit (6) for reading out the storage cells (5) and having an evaluation unit (7) for determining the angular position from a geometric position of the magnetised cells (5).

8. Angular position transmitter according to claim 7,
wherein the evaluation unit (7) is embodied so as to determine the angular position with the aid of at least one statistical method.

9. Angular position transmitter according to claim 7 or 8, wherein the magnet is magnetised centrically and eccentrically in respect of the motor axle (3).

10. Angular position transmitter according to one of claims 7 to 9,
wherein a number of rotations can be stored in a non-volatile storage device.

11. Angular position transmitter according to claim 10,
wherein the magnetically sensitive storage device (4) can be used as a non-volatile storage device and the number can be stored in at least one storage cell (5), which is not magnetisable by the magnet (2).

12. Angular position transmitter according to claim 11,
wherein at least one storage cell (5) can be shielded from the magnet (2) such that it cannot be magnetised thereby.

13. Motor (1) with an angular position transmitter according to one of claims 7 to 12.

## Revendications

1. Procédé de détermination de la position angulaire d'un rotor d'un moteur ( 1 ), dans lequel au moins un aimant ( 2 ) est relié indirectement ou directement à un axe ( 3 ) du moteur, au moins une mémoire ( 4 ) sensible magnétiquement ayant plusieurs cellules ( 5 ) de mémoire étant disposée de manière à ce qu'au moins certaines des cellules ( 5 ) de la mémoire soient aimantées par l'aimant ( 2 ), les cellules ( 5 ) de la mémoire étant lues et la position angulaire étant déterminée à partir d'une position géométrique des cellules ( 5 ) aimantées.

2. Procédé suivant la revendication 1,
dans lequel on utilise au moins une méthode statistique pour la détermination de la position angulaire.

3. Procédé suivant la revendication 1 ou 2,
dans lequel l'aimant est aimanté de manière centrée et est disposé de manière excentrée par rapport à l'axe ( 3 ) du moteur.

4. Procédé suivant l'une des revendications précédentes,
dans lequel on mémorise un certain nombre de rotations dans une mémoire non volatile.

5. Procédé suivant la revendication 4,
dans lequel on utilise, comme mémoire non volatile, la mémoire ( 4 ) sensible magnétiquement et on mémorise le nombre dans au moins une cellule ( 5 ) de mémoire, qui n'est pas aimantée par l'aimant ( 2 ).

6. Procédé suivant la revendication 5,
dans lequel on protège de l'aimant ( 2 ) au moins une cellule ( 5 ) de mémoire, de manière à ce qu'elle ne soit pas aimantée par celui-ci.

7. Indicateur de position angulaire pour la détermination de la position angulaire d'un rotor d'un moteur ( 1 ) comprenant au moins un aimant ( 2 ) pouvant être relié indirectement ou directement à un axe ( 3 ) du moteur, comprenant au moins une mémoire ( 4 ) qui est sensible magnétiquement, qui a plusieurs cellules ( 5 ) de mémoire, et qui peut être disposée de manière à ce qu'au moins certaines des cellules ( 5 ) de mémoire puissent être aimantées par l'aimant ( 2 ), comprenant une unité ( 6 ) de lecture pour la lecture des cellules ( 5 ) de mémoire et comprenant une unité ( 7 ) d'exploitation pour la détermination de la position angulaire à partir d'une position géométrique des cellules ( 5 ) aimantées.

8. Indicateur de position angulaire suivant la revendication 7, dans lequel l'unité ( 7 ) d'exploitation est constituée pour la détermination de la position angulaire au moyen d'au moins une méthode statistique.

9. Indicateur de position angulaire suivant la revendication 7 ou 8, dans lequel l'aimant est aimanté de manière centrée et peut être disposé de manière excentrée par rapport à l'axe ( 3 ) du moteur.

10. Indicateur de position angulaire suivant l'une des revendications 7 à 9, dans lequel un certain nombre de tours peut être mémorisé dans une mémoire non volatile.

11. Indicateur de position angulaire suivant la revendication 10, dans lequel peut être utilisée, comme mémoire non volatile, la mémoire ( 4 ) sensible magnétiquement et le nombre peut être mémorisé dans au moins une cellule ( 5 ) de mémoire, qui ne peut pas être aimantée par l'aimant ( 2 ).

12. Indicateur de position angulaire suivant la revendication 11, dans lequel au moins une cellule ( 5 ) de mémoire est protégée de l'aimant ( 2 ), de manière à ne pas pouvoir être aimantée par celui-ci.

13. Moteur ( 1 ) ayant un indicateur de position angulaire suivant l'une des revendications 7 à 12.
